# EUROPEAN PATENT SPECIFICATION

(11) **EP 3 482 810 B1**
(45) Date of publication and mention of the grant of the patent: **09.12.2020**
(21) Application number: 18198621.7
(22) Date of filing: 04.10.2018
(51) Int. Cl.: B01D 35/153, B01D 35/16, B01D 29/15, B01D 29/58, B01D 29/68, B01D 29/70

(54) **REVERSE RINSING FILTER AND METHOD FOR OPERATING THE SAME**
RÜCKSPÜLFILTER UND VERFAHREN ZUM BETREIBEN DESSELBEN
FILTRE DE RINÇAGE INVERSE ET PROCÉDÉ DE FONCTIONNEMENT CORRESPONDANT

(30) Priority: 09.11.2017 EP 17200762
(43) Date of publication of application: 15.05.2019
(73) Proprietor: Honeywell Technologies Sarl, 1180 Rolle (CH)
(72) Inventor: Haltmar, Bretislav, 664 57 Menín (CZ); Gdovec, Viliam, 66451 Slapanice u Brna (CZ)
(74) Representative: Sturm, Christoph

(56) References cited:
- EP-A1- 2 952 239
- EP-A1- 3 095 500
- DE-U1-202016 101 180
- DE-U1-202017 101 797

## Description

The present patent application relates to a reverse rinsing filter. Further on, the present patent application relates to a method for operating a reverse rinsing filter.

EP 2 952 239 A1 discloses a reverse rinsing filter. The reverse rinsing filter disclosed by EP 2 952 239 A1 comprises a housing. The housing provides an inlet chamber being in communication with an inlet opening for liquid medium to be filtered. The housing provides further an outlet chamber being in communication with an outlet opening for filtered liquid medium. The housing provides further a discharge chamber being in communication with a discharge opening. In a filtration mode of the reverse rinsing filter said discharge opening is closed by a discharge valve assigned to the discharge opening. In a reverse rinsing mode of the reverse rinsing filter said discharge opening is opened by the discharge valve.

The reverse rinsing filter disclosed by EP 2 952 239 A1 further comprises a filter insert positioned within the housing. The filter insert comprises a filter sieve with a lower filter sieve section and an upper filter sieve section. The filter insert further comprises an impeller positioned within an interior chamber of the filter insert.

In the filtration mode of the reverse rinsing filter disclosed by EP 2 952 239 A1, when the discharge valve is fully closed, the filter insert is in a first relative position within the housing such that the upper filter sieve section is blocked for the liquid medium to be filtered and the lower filter sieve section is unblocked for the liquid medium to be filtered, so that the lower filter sieve section can filter liquid medium that flows from the inlet chamber through the lower filter sieve section into the interior chamber of the filter insert. Filtered liquid medium flows from the interior chamber of the filter insert into the outlet chamber.

In the reverse rinsing mode of the filter disclosed by EP 2 952 239 A1, when the discharge valve is fully or almost fully opened, the filter insert is in a second relative position within the housing such that the upper filter sieve section is unblocked for the liquid medium to be filtered and the lower filter sieve section is blocked for the liquid medium to be filtered but unblocked for filtered liquid medium, so that liquid medium flows from the inlet chamber through the upper filter sieve section into the interior chamber of the filter insert. Filtered liquid medium flows from the interior chamber of the filter insert through the lower filter sieve section into the inlet chamber and then to the discharge chamber as well as to the outlet chamber.

Other reverse rinsing filters according to the prior art are disclosed by the product leaflets "F78TS, Reverse rinsing fine filter with flanges, EN0H-1178GE23 R0317 Honeywell GmbH, year 2017" and "F76S, Reverse rinsing fine filter, EN0H-1110GE23 R1116 Honeywell GmbH, year 2016".

The filter sieve of the reverse rinsing filter prevents the ingress of impurities, for example rust particles, strands of hemp and grains of sand. Once the filter sieve is loaded, the backwash process starts manually or automatically and flushes the particles off the filter sieve. During backwashing filtered liquid medium is still provided.

As mentioned above, the filter sieve is divided into two sections, namely in the lower filter sieve section and the upper filter sieve section. In the filtration mode, only the lower filter sieve section is pored through from outside to inside. The upper filter sieve section does not come in contact with unfiltered liquid medium. When the discharge valve is opened for reverse rinsing, then the whole filter insert is moved downwards until the supply of liquid medium to lower filter sieve section is stopped. Simultaneously, the flow of unfiltered liquid medium is opened to the upper filter sieve section. Then, the liquid medium needed passes through the upper filter sieve section, then through the rotating impeller and the lower filter sieve section from inside to outside. The filter automatically switches back to the filtration mode when the discharge valve is closed again. During the reverse rinsing mode only the lower filter sieve section becomes backwashed. The upper filter sieve section remains un-backwashed over the entire operation time of the reverse rinsing filter. EP 3 095 500 A1 discloses an assembly having a pressure regulator and a filter element. The filter insert comprises an upper filter section and a lower filter section. Channels are provided which connect an area positioned around the upper filter section with an area positioned below the lower filter section.

DE 20 2016 101 180 U1 and DE 20 2017 101 797 U1 discloses other filters.

Against this background, a novel reverse rinsing filter is provided. The reverse rinsing filter is defined in the claim 1.

According to present application, the filter insert comprises flow ducts for the liquid medium. Said flow ducts are positioned outside of the interior chamber of the filter insert and around the filter sieve. The flow ducts extend from the upper filter sieve section towards the discharge chamber.

According to present application, the housing provides in the region of the discharge chamber stop elements for lower ends of the flow ducts. The flow ducts are closed at their lower ends when the lower ends of the flow ducts are pressed against the stop elements. The flow ducts are opened when the lower ends of the flow ducts are lifted up from the stop elements.

The flow ducts and the stop elements are adapted such that in the filtration mode of the reverse rinsing filter, when the discharge valve is fully closed and the filter insert is in the first relative position within the housing, the lower ends of the flow ducts are lifted up from the stop elements.

Further on, the flow ducts and the stop elements are adapted such that in the reverse rinsing mode of the reverse rinsing filter, when the discharge valve is fully or almost fully opened and the filter insert is in a second relative position within the housing, the lower ends of the flow ducts are pressed against the stop elements. In the reverse rinsing mode the lower filter sieve section is backwashed by filtered liquid medium.

In an additional reverse rinsing mode of the reverse rinsing filter, when the discharge valve is in a defined partially opened status, the discharge opening is partially opened by the discharge valve, the filter insert is in the first relative position within the housing and the lower ends of the flow ducts are lifted up from the stop elements. In said additional reverse rinsing mode the lower filter sieve section can filter liquid medium that flows from the inlet chamber through the lower filter sieve section into the interior chamber of the filter insert. The filtered liquid medium then flows from the interior chamber of the filter insert into the outlet chamber and from the interior chamber of the filter insert through the upper filter sieve section and through the flow ducts into the discharge chamber. In the additional reverse rinsing mode the upper filter sieve section is backwashed by filtered liquid medium.

The invention allows a backwashing of the lower filter sieve section in the regular reverse rinsing mode. The invention further allows a backwashing of the upper filter sieve section in the additional reverse rinsing mode. Filtered liquid medium is used for both reverse rinsing modes, namely for the backwashing of the lower filter sieve section in the regular reverse rinsing mode and for the backwashing of the upper filter sieve section in the additional reverse rinsing mode. Sequential backwashing of the lower filter sieve section and the upper sieve section is provided. Countervailing flows of the liquid medium are avoided in both reverse rinsing modes.

The design of the reverse rinsing filter allowing the backwashing of both the lower filter sieve section and of the upper filter sieve section is simple, compact and reliable. Only a few additional parts, namely the flow ducts and the stop members, are necessary.

Preferably, in the reverse rinsing mode of the reverse rinsing filter, when the discharge valve is fully or almost fully opened and the filter insert is in a second relative position within the housing, the lower ends of the flow ducts are sealed by the stop elements. In the reverse rinsing mode, no liquid medium flows through the flow ducts allowing a conventional backwashing of the lower filter sieve section at high efficiency.

Preferably, the filter insert comprises a bottom wall which delimits the interior chamber of the filter insert. In the filtration mode of the reverse rinsing filter and in the additional reverse rinsing mode of the reverse rinsing filter, the bottom wall of the filter insert is positioned radial inwardly of a radial inwardly extending protrusion of the housing thereby separating the inlet chamber from the discharge chamber. The flow ducts extend through the bottom wall. This provides a very effective filtering of the liquid medium in the filtration mode and a very effective backwashing of the upper filter sieve section in the additional reverse rinsing mode.

Preferably, a radially outer section of the bottom wall is conically shaped in such a way that in the filtration mode and in the additional reverse rinsing mode a gap provided between the bottom wall of the filter insert and the radial inwardly extending protrusion of the housing is tapering from the inlet chamber towards the discharge chamber. This increases efficiency of filtering in the filtration mode and backwashing of the upper filter sieve section in the additional reverse rinsing mode.

The radially outer section of the bottom wall may comprise a recess accommodating a sealing element. This further increases efficiency of backwashing of the upper filter sieve section in the additional reverse rinsing mode.

The method for operating a reverse rinsing filter is defined in claim 13.

Preferred developments of the invention are provided by the dependent claims and the description which follows. Exemplary embodiments are explained in more detail on the basis of the drawing, in which:
- Figure 1: shows a vertically oriented cross section through a reverse rinsing filter according to a first embodiment of the present application in a filtration mode of the reverse rinsing filter;
- Figure 2: shows the cross section through the reverse rinsing filter according to Figure 1 in a reverse rinsing mode of the reverse rinsing filter;
- Figure 3: shows the cross section through the reverse rinsing filter according to Figure 1 in an additional reverse rinsing mode of the reverse rinsing filter;
- Figure 4: shows a horizontally oriented cross section through the reverse rinsing filter according to Figures 1, 3;
- Figure 5: shows a horizontally oriented cross section through the reverse rinsing filter according to Figure 2;
- Figure 6: shows the detail VI of Figure 1;
- Figure 7: shows an alternative for the detail of Figure 6;
- Figure 8: shows another alternative for the detail of Figure 6;
- Figure 9: shows another alternative for the detail of Figure 6;
- Figure 10: shows a a vertically oriented cross section through a reverse rinsing filter according to a second embodiment of the present application in a filtration mode of the reverse rinsing filter;
- Figure 11: shows a cross section through the reverse rinsing filter according to Figure 10 in a reverse rinsing mode of the reverse rinsing filter;
- Figure 12: shows a cross section through the reverse rinsing filter according to Figure 10 in an additional reverse rinsing mode of the reverse rinsing filter,
- Figure 13: shows a horizontally oriented cross section through the reverse rinsing filter according to Figures 10, 11, 12.

The present application relates to a reverse rinsing filter and to a method for operating the reverse rinsing filter.

The reverse rinsing filter according to the present application is preferably used for the filtration of potable water. Reverse rinsing is also often called backwashing.

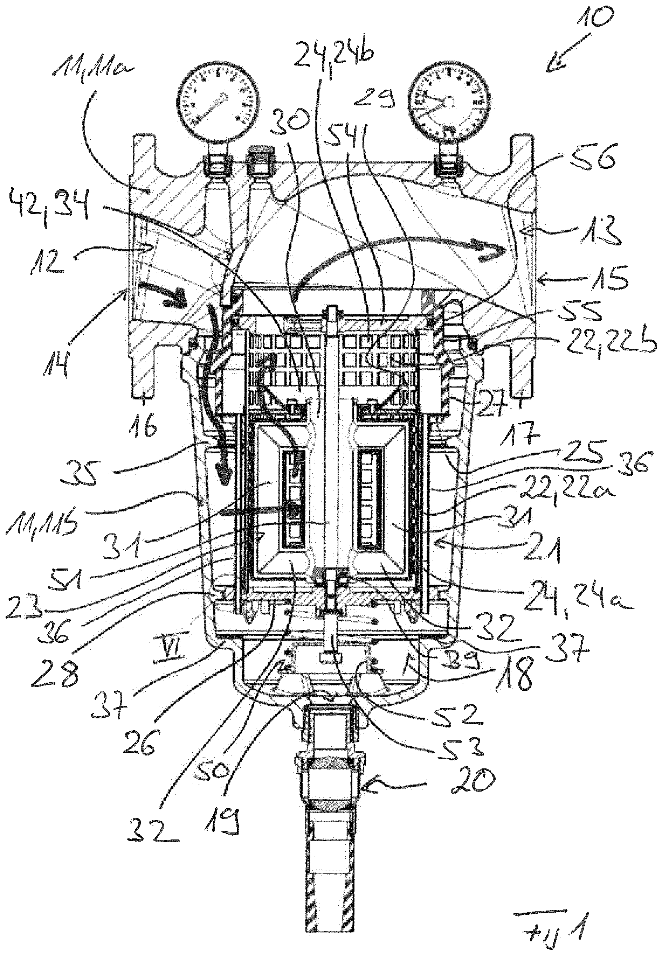

Figures 1-9 show details of a first embodiment of a reverse rinsing filter 10 according to the present application. The reverse rinsing filter 10 comprises a housing 11, wherein the housing 11 provides an inlet chamber 12 for liquid medium to be filtered and an outlet chamber 13 for filtered liquid medium.

The housing 11 comprises an upper connection section 11a and a lower filter-bowl section 11b.

The inlet chamber 12 of the housing 11 of the reverse rinsing filter 10 is in communication with an inlet opening 14 of the housing 11 and the outlet chamber 13 of the housing 11 of the reverse rinsing filter 10 is in communication with an outlet opening 15 of the housing 11. Preferably, the inlet chamber 12 has two sub-chambers 12a, 12b, namely a lower sub-chamber 12a and an upper sub-chamber 12b.

The lower sub-chamber 12a of the inlet chamber 12 can also be called first sub-chamber 12a. The upper sub-chamber 12b of the inlet chamber 12 can also be called second sub-chamber 12b.

The inlet opening 14 is provided in the region of an inlet flange 16 and the outlet opening 15 is provided in the region of an outlet flange 17 of the connection section 11a of the housing 11. The reverse rinsing filter 10 is connectable to an inlet pipe through said inlet flange 16 and to an outlet pipe through said outlet flange 17.

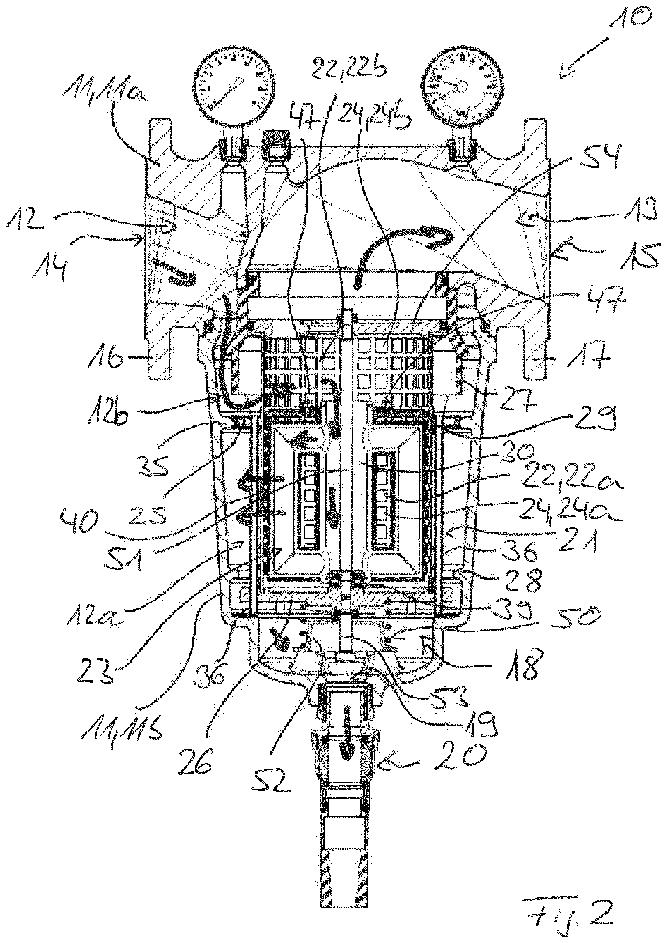

The housing 11 of reverse rinsing filter 10 provides further a discharge chamber 18 being in communication with a discharge opening 19. A discharge valve 20 is assigned to the discharge opening 19. In a so-called filtration mode of the reverse rinsing filter 10 (see Figure 1) said discharge opening 19 is fully closed by the discharge valve 20 assigned to the discharge opening 19. In a so-called reverse rinsing mode of the reverse rinsing filter 10 (see Figure 2) said discharge opening 19 is fully or almost fully opened by the discharge valve 20.

The reverse rinsing filter 10 comprises a filter insert 21. The filter insert 21 is positioned within the housing 11, wherein the filter insert 21 comprises a filter sieve 22 with a lower filter sieve section 22a and with an upper filter sieve section 22b. The filter insert 21 further comprises an impeller 23 positioned within an interior chamber 24 of the filter insert 21.

The lower filter sieve section 22a of the filter insert 21 can also be called first filter sieve section 22a. The upper filter sieve section 22b of the filter insert 21 can also be called second filter sieve section 22a.

In the so-called filtration mode of the reverse rinsing filter 10 (see Figure 1), with the discharge valve 20 being fully closed, the filter insert 21 is in a first relative position within the housing 11. In said first relative position of the filter insert 21 within the housing 11 the upper filter sieve section 22b is blocked for unfiltered liquid medium and the lower filter sieve section 22a is unblocked for unfiltered liquid medium.

In said first relative position of the filter insert 21 within the housing 11 the lower filter sieve section 22a can filter the unfiltered liquid medium that flows from the inlet chamber 12 through the lower filter sieve section 22a into the interior chamber 24 of the filter insert 21. Said filtered liquid medium then flows from the interior chamber 24 of the filter insert 21 into the outlet chamber 13.

In the so-called reverse rinsing mode of the reverse rinsing filter 10 (see Figure 2), with the discharge valve 20 being fully or almost fully opened, the filter insert 21 is in a second relative position within the housing 11. In said second relative position of the filter insert 21 within the housing 11 the upper filter sieve section 22b is unblocked for unfiltered liquid medium and the lower filter sieve section 22a is blocked for unfiltered liquid medium but unblocked for filtered liquid medium.

In said second relative position of the filter insert 21 within the housing 11 unfiltered liquid medium flows from the inlet chamber 12 through the upper filter sieve section 22b into the interior chamber 24 of the filter insert 21. Filtered liquid medium flows from the interior chamber 24 of the filter insert 21 through the lower filter sieve section 22a back into inlet chamber 12, and then from the inlet chamber 12 into the discharge chamber 18. The lower filter sieve section 22a becomes backwashed by filtered liquid medium. Filtered liquid medium flows also from the interior chamber 24 of the filter insert 21 into the outlet chamber 13.

An upper protrusion 25 extends radially outward from the filter insert 21, namely from a section of the filter sieve 22 being positioned between the upper filter sieve section 22b and the lower filter sieve section 22a. A bottom wall 26 of the filter insert 21 delimits the interior chamber 24 of the filter insert 21.

In the so-called filtration mode of the reverse rinsing filter 10 (see Figure 1), said upper protrusion 25 of the filter insert 21 is in contact with an inner wall section 27 of the housing 11 thereby blocking the upper filter sieve section 22b from unfiltered liquid medium.

Further on, in the so-called filtration mode of the reverse rinsing filter 10 (see Figure 1), the bottom wall 26 of the filter insert 21 is positioned radial inwardly of a lower radial inwardly extending protrusion 28 of an outer wall section of the housing 11 thereby separating the inlet chamber 12 from the discharge chamber 18.

In the so-called filtration mode of the reverse rinsing filter 10, a small gap 33 is delimited by and provided between the protrusion 28 and the bottom wall 26.

As explained above, in the so-called filtration mode of the reverse rinsing filter 10 liquid medium to be filtered flows from the inlet chamber 12 through the lower filter sieve section 22a into the interior chamber 24 of the filter insert 21 and becomes thereby filtered. Then said filtered liquid medium flows from the interior chamber 24 of the filter insert 21 into the outlet chamber 13.

In the so-called reserve rinsing mode of the reverse rinsing filter 10 (see Figure 2), said upper protrusion 25 of the filter insert 21 is in contact with an upper radial inwardly extending protrusion 35 of the outer wall section of the housing 11 thereby unblocking the upper filter sieve section 22b for the unfiltered liquid medium and thereby dividing the inlet chamber 12 into the two sub-chambers 12a, 12b, namely thereby dividing or separating the lower sub-chamber 12a from the upper sub-chamber 12b. The lower filter sieve section 22a is then blocked from for the unfiltered liquid medium.

Further on, in the so-called reserve rinsing mode of the reverse rinsing filter 10 (see Figure 2), the bottom wall 26 of the filter insert 21 is not positioned radial inwardly of the radial inwardly extending protrusion 28 of an outer wall section of the housing 11 thereby connecting the inlet chamber 12, namely the lower sub-chamber 12a of the same, and the discharge chamber 18.

In the so-called reverse rinsing mode the bottom wall 26 is positioned axially offset from the radial inwardly extending protrusion 28 of the housing 11 thereby connecting the lower sub-chamber 12a of the inlet chamber 12 with the discharge chamber 18.

As explained above, in the so-called reserve rinsing mode of the reverse rinsing filter 10 unfiltered liquid medium flows from the inlet camber 12, namely from the upper sub-chamber 12b of the same, through the upper filter sieve section 22b into the interior camber 24 of the filter insert 21 and becomes thereby filtered. The filtered liquid medium then flows from the interior chamber 24 of the filter insert 21 through the lower filter sieve section 22a back into inlet chamber 12, namely into the lower sub-chamber 12a of the same, and then from the lower sub-chamber 12a of the inlet chamber 12 into the discharge chamber 18. The lower filter sieve section becomes backwashed by filtered liquid medium in the reserve rinsing mode.

Unfiltered liquid medium flows through the upper filter sieve section 22b only in the reverse rinsing mode of the reverse rinsing filter 10. Liquid medium flows through the lower filter sieve section 22a in the filtering mode and in the reverse rinsing mode of the reverse ringing filter 10, namely in opposite directions. In the filtering mode, unfiltered liquid medium passes through the lower filter sieve section 22a radial inwardly from the inlet chamber 12 into the interior chamber 24. In the reserve rinsing mode, filtered liquid medium passes through the lower filter sieve section 22a radial outwardly from the interior chamber 24 into the inlet chamber 12, namely into the lower sub-chamber 12a of the inlet chamber 12.

When the filter insert 21 is in the first relative position within the housing 11, the lower sub-chamber 12a and the upper sub-chamber 12b of the inlet chamber 12 are connected with each other while the lower sub-chamber 12a is divided or separated from the discharge chamber 18. When the filter insert 21 is in the second relative position within the housing 11, the lower sub-chamber 12a and the upper sub-chamber 12b of the inlet chamber 12 are divided or separated from each other while the lower sub-chamber 12a is connected with the discharge chamber 18.

The filter insert 21 comprises a dividing wall 29. The diving wall 29 separates the interior chamber 24 of the filter insert 21 into an upper sub-chamber 24b and a lower sub-chamber 24a.

The lower sub-chamber 24a of the interior chamber 24 can also be called first sub-chamber 24a. The upper sub-chamber 24b of the interior chamber 24 can also be called second sub-chamber 24b.

The upper sub-chamber 24b of the interior chamber 24 is in the reverse rinsing mode in communication with the inlet chamber 12, namely with the upper sub-camber 12a of the same, through the upper filter sieve section 22b. The lower sub-chamber 24a of the interior chamber 24 is in the reverse rinsing mode as well as in the filtering mode in communication with the inlet chamber 12 through the lower filter sieve section 22a.

The impeller 23 is positioned inside the lower sub-chamber 24b of the interior chamber 24. The impeller 23 of the filter insert 21 comprises a central tube 30 and at least one outer tube 31 running preferably parallel to said central tube 30. In the embodiment shown in Figure 1 to Figure 9, the impeller 23 comprises one central tube 30 and two outer tubes 31 running parallel to said central tube 30. The central tube 30 of the impeller 23 is in communication with the upper sub-chamber 24b of the interior chamber 24. Further on, the central tube 30 of the impeller 23 is in communication with each outer tube 31, namely through at least one connecting tube 32 of the impeller 23 extending between the central tube 30 and the respective outer tube 31.

In the embodiment shown in Figure 1 to Figure 9, two connecting tubes 32 are running between the central tube 30 and each of the two outer tubes 31. The connecting tubes 32 run perpendicular to the central tube 30 and the outer tubes 31. Each outer tube 31 comprises nozzles 40.

The filter insert 21 comprises a valve 34 assigned to said dividing wall 29.

In the so-called filtration mode of the reverse rinsing filter 10 (see Figure 1) said valve 34 is opened thereby allowing the liquid medium flowing through the lower filter sieve section 22a into lower sub-chamber 24a of the interior chamber 24 and flowing around the tubes 30, 31, 22 of the impeller 23 to flow from the lower sub-chamber 24a of the interior chamber 24 into the upper sub-chamber 24b of the same.

In the so-called reverse rinsing mode of the reverse rinsing filter 10 (see Figure 2) said valve 34 is closed thereby allowing the liquid medium flowing through the upper filter sieve section 22b into the upper sub-chamber 24b of the interior chamber 24 to flow from the upper sub-chamber 24b of the interior chamber 24 into the central tube 30 of the impeller 23, then through the or each connecting tube 32 of the impeller 23, then through the or each outer tube 31 of the impeller 23 and through the nozzles 40 of each of the outer tubes 31 of the impeller 23 to the lower filter sieve section 22a.

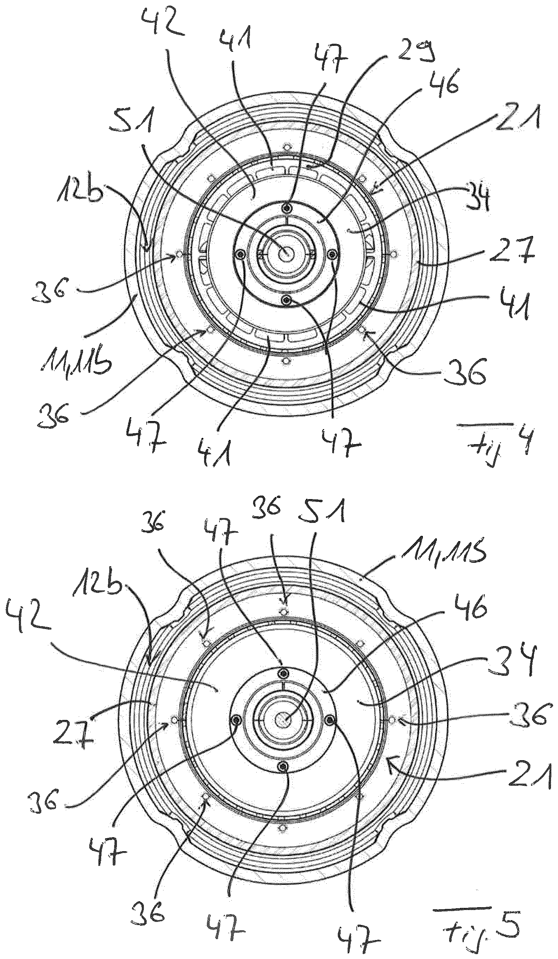

The dividing wall 29 which separates the interior chamber 24 of the filter insert 21 into the upper sub-chamber 24b and the lower sub-chamber 24a runs in radial direction of the filter insert 21. The dividing wall 29 comprises openings 41 (see Figure 4), wherein in the filtration mode of the reverse rinsing filter 10 (see Figure 4) said openings 41 of the dividing wall 29 are opened by the valve 34 and wherein in the reverse rinsing mode (see Figure 5) of the reverse rinsing filter 10 said openings 41 of the dividing wall 29 are closed by the valve 34.

The valve 34 is provided by a flap valve having a flap 42 made from an elastomer material, wherein in the reverse rinsing mode of the reverse rinsing filter 10 the flap 42 of said flap valve 34 runs parallel to the dividing wall 29 thereby covering or closing the openings 41 of the dividing wall 29, and wherein in the filtration mode of the reverse rinsing filter 10 the flap 42 of said flap valve 34 is lifted up from the dividing wall 29 thereby uncovering or opening the openings 41 of the dividing wall 29. The flap 42 of the flap valve 34 oscillates in the flow of filtered liquid medium during the filtration mode of the reverse rinsing filter 10. Such an oscillation aids to maintain clean the upper filter sieve section 22b. During the reverse rinsing mode of the reverse rinsing filter 10 the closed flap valve 10 directs the liquid medium through the tube impeller 23. The flap 42 of the flap valve 34 is mounted to the dividing wall 29 by an annular fixing ring 46 and mounting elements 47.

Details of the flap 42 of the flap valve 34 and of the impeller 23 of the sieve insert 21 are described in EP 2 952 239 A1.

It should be mentioned that in the reverse rinsing mode of the reverse rinsing filter 10 the central tube 30 of the impeller 23 and thereby the entire impeller 23 rotates around a longitudinal axis of the filter insert 21. Filtered liquid medium does not flow through the impeller 23 during the filtration mode of the reverse rinsing filter 10. This provides a higher flow rate of filtered liquid medium during the filtration mode of the reverse rinsing filter 10 because the flow is not reduced by design of the impeller 23.

A mounting rod 51 of the filter insert 21 extends in longitudinal direction of the same, namely in direction of the longitudinal axis of the filter insert 21, wherein said mounting rod 51 extends through the bottom wall 26 of the filter insert 21. The mounting rod 51 carries bearings 39 so that the impeller 23 can rotate around the mounting rod 51. A screw 53 acting together with the mounting rod 51 carries a spring cup 52 of a spring 50, wherein the spring 50 acts with one end on the spring cup 52 and with the opposite end on the bottom wall 26.

Opposite to the bottom wall 26 of the filter insert 21 the filter insert 21 comprises an upper centering element 54 carried by the mounting rod 51 and acting together with an inner wall section 55 of the housing 11 being positioned above the inner wall section 27 of the housing 11. The centering element 54 guides the filter insert in the upper region of the housing 11. The wall sections 27, 55 are provided by a monolithic inner guiding section of the housing 11 which is mounted in the connection section 11a of the housing 11 via a pressed O-ring 56.

The filter insert 21 of the reverse rinsing filter 10 of the present application comprises flow ducts 36 for liquid medium. Said flow ducts 36 are positioned outside of the interior chamber 24 of the filter insert 21 and around the filter sieve 22. The flow ducts 36 extend from the upper filter sieve section 22b towards the discharge chamber 18.

In the embodiment of Figures 1 to 9, the flow ducts 36 extend from the upper protrusion 25 of the filter insert 21 towards the discharge chamber 18 and thereby through the bottom wall 26 of the filter insert 21.

As mentioned above, the wall sections 27, 55 are provided by a monolithic inner guiding section of the housing 11. A chamber between said guiding section and the upper filter sieve section 22b of filter sieve 22 is connected via the flow ducts 36 with the discharge chamber 18.

The housing 11 of the reverse rinsing filter 10 of the present application provides in the region of the discharge chamber 18 stop elements 37 for lower ends 38 of the flow ducts 36.

The flow ducts 36 are closed at their lower ends 38 when the lower ends 38 of the flow ducts 36 are pressed against the stop elements 37. The flow ducts 36 are opened when the lower ends 38 of the flow ducts 36 are lifted up from the stop elements 37.

In the filtration mode of the reverse rinsing filter 10 (see Figure 1), when the discharge valve 20 is fully closed and the filter insert 21 is in the first relative position within the housing 11, the lower ends 38 of the flow ducts 36 are lifted up from the stop elements 37. The flow ducts 36 are then opened. However, no liquid medium flows through the flow ducts 36 in the filtration mode.

In the reverse rinsing mode of the reverse rinsing filter 10 (See Figure 2), when the discharge valve 20 is fully or almost fully opened and the filter insert 21 is in the second relative position within the housing 11 and when the lower filter sieve section 22a becomes backwashed, the lower ends 38 of the flow ducts 36 are pressed against the stop elements 37 and are thereby sealed at the lower ends 38. The flow ducts 36 are then closed at their lower ends 38. No liquid medium flows through the flow ducts 36 in the reverse rinsing mode.

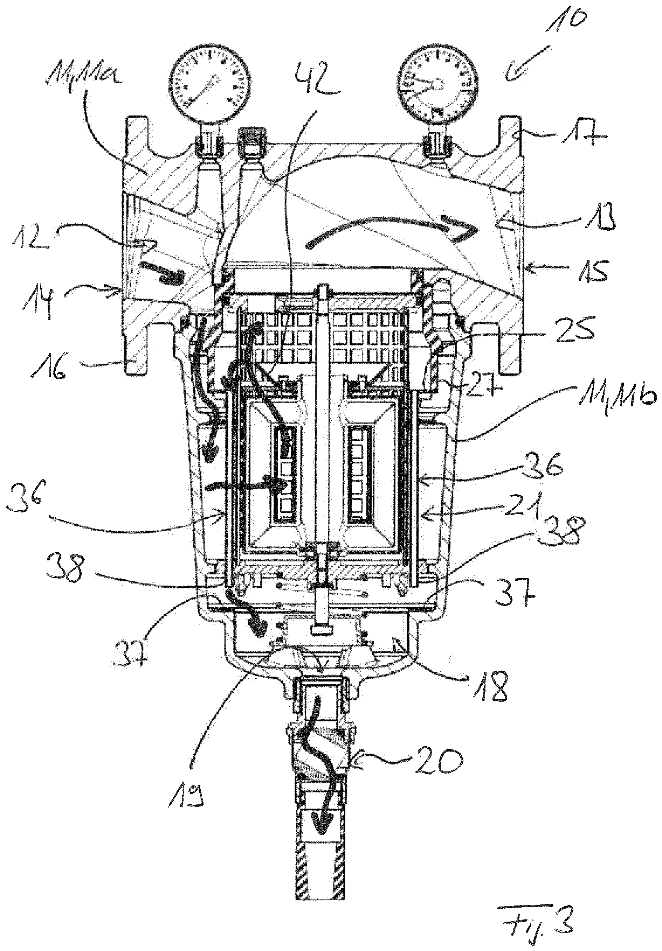

In an additional reverse rinsing mode of the reverse rinsing filter 10 (see Figure 3), when the discharge valve 20 and the discharge opening 19 are in a defined partially opened status, the filter insert 21 is in the first relative position within the housing 11 such that the lower filter sieve section 22a can filter liquid medium that flows from the inlet chamber 12 through the lower filter sieve section 22a into the interior chamber 24 of the filter insert 21.

In the additional reverse rinsing mode, the filtered liquid medium can then flow from the interior chamber 24 of the filter insert 21 into the outlet chamber 13 as well as from the interior chamber 24 of the filter insert 21 through the upper filter sieve section 22b and through the flow ducts 36 into the discharge chamber 18 thereby allowing the upper filter sieve section 22b to become backwashed. In an additional reverse rinsing mode the flow ducts 36 are opened.

The reverse rinsing filter 10 of the present application allows a backwashing of the lower filter sieve section 21a in the regular reverse rinsing mode. The reverse rinsing filter 10 of the present application further allows a backwashing of the upper filter sieve section 21b in the additional reverse rinsing mode.

In the filtration mode of the reverse rinsing filter 10 (see Figure 1), when the discharge valve 20 is fully closed and the filter insert 21 is in the first relative position within the housing 11, no liquid fluid flows through the flow ducts 36. Also in the reverse rinsing mode of the reverse rinsing filter 10 (See Figure 2), when the discharge valve 20 is fully or almost fully opened and the filter insert 21 is in the second relative position within the housing 11, no liquid fluid flows through the flow ducts 36. Only in the additional reverse rinsing mode of the reverse rinsing filter 10 (see Figure 3), when the discharge valve 20 is in a defined partially opened status and when the filter insert 21 is in the first relative position within the housing 11, liquid fluid flows through the flow ducts 36.

The filter insert 21 of the reverse rinsing filter 10 of the present application comprises a plurality of flow ducts 36. Said flow ducts 36 are positioned equally distributed around the filter sieve 22 in close proximity to the filter sieve 22 (see Figures 4, 5).

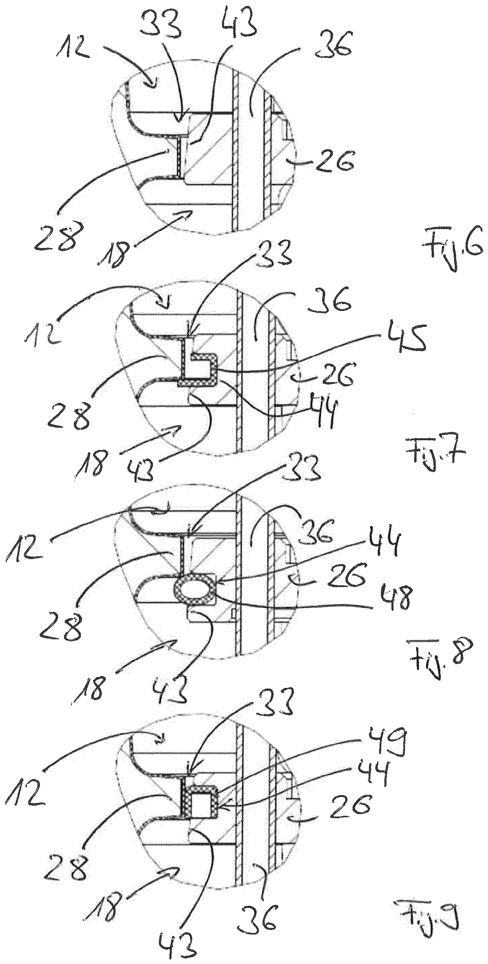

As can be best seen in Figure 6, a radially outer section 43 of the bottom wall 26 of the filter insert 21 is conically shaped. In the filtration mode of the reverse rinsing filter 10 (see Figure 1) and in the additional reverse rinsing mode of the reverse rinsing filter 10 (see Figure 3) the gap 33 between the bottom wall 26 of the filter insert 21 is delimited by said radially outer section 43 of the bottom wall 26 any by the radial inwardly extending protrusion 28 of the housing 11.

Said gap 33 is tapering from the inlet chamber 12, namely from the lower sub-chamber 12a of the inlet chamber 12, towards the discharge chamber 18.

In Figures 7, 8 and 9 each showing an alternative for Figure 6, the radially outer section 43 of the bottom wall 26 comprises a recess 44 accommodating a sealing element 45, 48 or 49.

The sealing elements 45, 48, 49 seal the gap 33, namely in the filtration mode and in the additional reverse rinsing mode of the reverse rinsing filter 10.

The sealing element 48 of Figure 8 is provided by an O-ring and seals against a lower edge of the protrusion 28. The sealing element 49 of Figure 9 is U-shaped and seals against an inner surface of the protrusion 28. The sealing element 45 of Figure 7 is U-shaped or L-shaped and seals against the lower edge of the protrusion 28.

The discharge valve 20 is preferably provided by a ball valve. Also other valve types can be used.

In the filtration mode of the reverse rinsing filter 10 (see Figure 1) a valve body of the discharge valve 20 is in a first position.

In the reverse rinsing mode of the reverse rinsing filter 10 (see Figure 2) the valve body is rotated by around 90°±10° relative to the first position. In said position the discharge valve 20 allows a full flow rate through the same.

In the additional reverse rinsing mode of the reverse rinsing filter 10 (see Figure 3) the valve body is rotated by a maximum of around 35° relative to the first position, thereby allowing a flow rate of around 20% of the full flow rate (which is provided in the reverse rinsing mode).

The rotation of the valve body depends on the pressure conditions in the reverse rinsing filter, on the design of the valve body.

In the first position of the valve body of the discharge valve 20 (corresponding to 0° and 180°), the discharge valve 20 is fully closed. The filter insert 21 is then in the first relative position within the housing 11. The force provided by the spring 50 and the pressure difference across the filter insert 21 moves and keeps the filter insert 21 in the first relative position within the housing 11 when the discharge valve 20 is fully closed. The reverse rinsing filter 10 is then in the filtration mode of Figure 1. When the valve body is rotated by e.g. 90°±10° relative to the first position of the valve body, then the discharge valve 20 is fully or almost fully opened. Then, the pressure difference across the filter insert 21 moves and keeps the filter insert 21 in the second relative position within the housing 11. The reverse rinsing filter 10 is then in the reverse rinsing mode of Figure 2 allowing only the lower filter sieve section 22a to become backwashed.

When the valve body is rotated by e.g. a maximum of 35° relative to the first position of the valve body, then the discharge valve 20 is in the defined partially opened status. Then, the pressure difference across the filter insert 21 moves and keeps the filter insert 21 in the first relative position within the housing 11. The reverse rinsing filter 10 is then in the additional reverse rinsing mode of Figure 3 allowing only the upper filter sieve section 22b to become backwashed.

The other positions of the valve body (e.g. between 35° and 80° as well as between 100° and 145°) of the discharge valve 20 are transitional positions in which the filter insert 21 moves between the first relative position within the housing 11 and the second relative position within the housing 11.

Backwashing of the upper filter sieve section 22b of the filter sieve 22 is performed by partially opened discharge valve 20. There is provided pressure drop across the filter sieve 22 and the upper filter sieve section 22b of the filter sieve 22 is backwashed from inside to outside via the flow ducts 36. The liquid medium flows through the flow ducts 36 directly into the discharge chamber 18. Backwashing of the upper filter sieve section 22b is done before the filter insert 21 moves down. When the filter insert 21 is moved down, the flow ducts 36 are closed by the stop elements 37 and backwashing of the lower filter sieve section 22a is performed subsequently by fully or almost fully opened discharge valve 20. The same but in converse sequence occurs by closing the discharge valve 20.

The sequence of the operation modes depends on the rotation of the valve body of the discharge valve. When the discharge valve 20 is fully closed (position of valve body e.g. 0°), the reverse rinsing filter is in the filtration mode.

Then, when the valve body of the discharge valve 20 is rotated from 0° to 180°, the reverse rinsing filter goes through following operation modes: backwashing of the upper sieve, moving of the filter sieve down, backwashing of the lower main sieve, moving of the filter sieve up, backwashing of the upper sieve, again filtration.

The operation of the discharge valve 20 can be effected manually or automatically by an actuator like a motor.

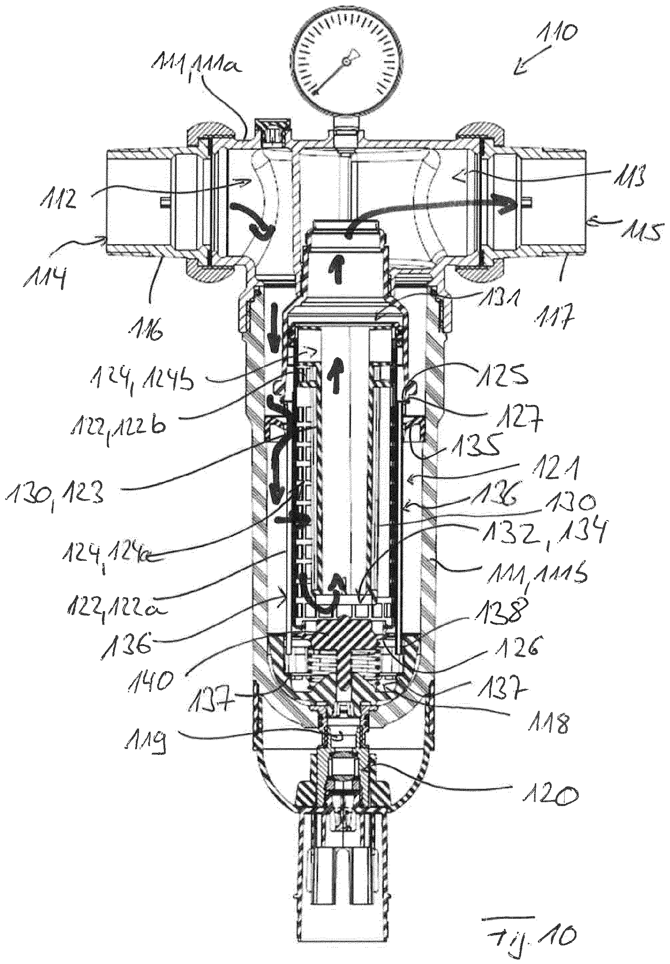

Figures 10-13 show details of a second embodiment of a reverse rinsing filter 110 according to the present application. The reverse rinsing filter 110 comprises a housing 111, wherein the housing 111 provides an inlet chamber 112 for liquid medium to be filtered and an outlet chamber 113 for filtered liquid medium. The housing 111 comprises an upper connection section 111a and a lower filter-bowl section 111b.

The inlet chamber 112 of the housing 111 of the reverse rinsing filter 110 is in communication with an inlet opening 114 of the housing 111 and the outlet chamber 113 of the housing 111 of the reverse rinsing filter 110 is in communication with an outlet opening 115 of the housing 111. The inlet opening 114 is provided in the region of an inlet connector 116 and the outlet opening 115 is provided in the region of an outlet connector 117 of the connection section 111a of the housing 111. The reverse rinsing filter 110 is connectable to an inlet pipe through said inlet connector 116 and to an outlet pipe through said outlet connector 117.

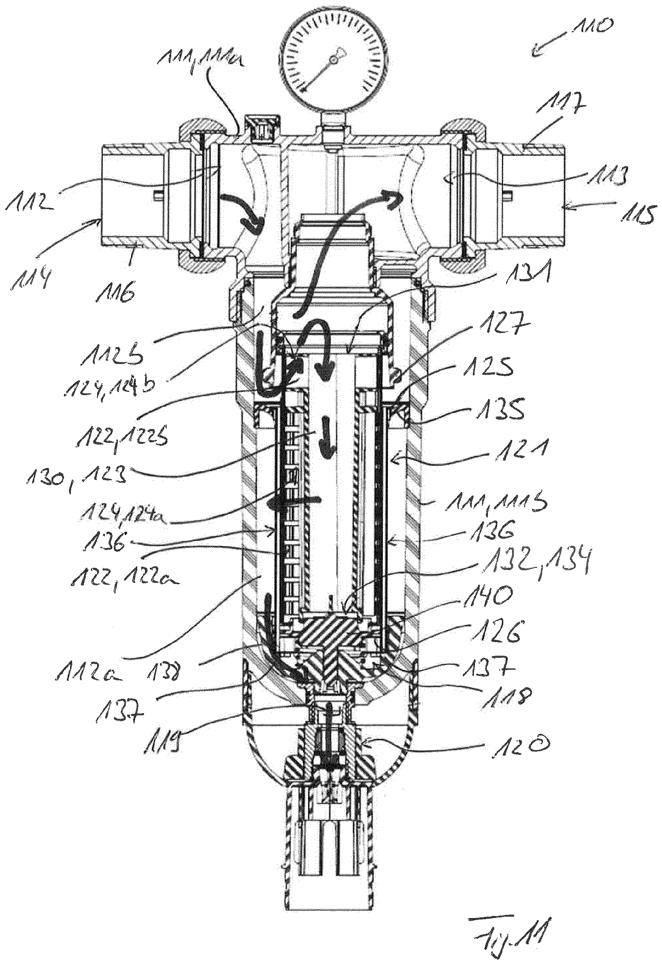

The housing 111 of reverse rinsing filter 110 provides further a discharge chamber 118 being in communication with a discharge opening 119. A discharge valve 120 is assigned to the discharge opening 119. In a so-called filtration mode of the reverse rinsing filter 110 (see Figure 10) said discharge opening 119 is fully closed by the discharge valve 120 assigned to the discharge opening 119. In a so-called reverse rinsing mode of the reverse rinsing filter 110 (see Figure 11) said discharge opening 119 is fully or almost fully opened by the discharge valve 120.

The reverse rinsing filter 110 comprises a filter insert 121. The filter insert 121 is positioned within the housing 111, wherein the filter insert 121 comprises a filter sieve 122 with a lower filter sieve section 122a and with an upper filter sieve section 122b. The filter insert 121 further comprises an impeller 123 positioned within an interior chamber 124 of the filter insert 121. Said interior chamber 124 comprises the sub-chambers 124a, 124b. In the embodiment of Figures 10 to 13, these sub-chambers 124a, 124b are created by a dividing wall which is part of the impeller 123.

In the filtration mode of the reverse rinsing filter 110 (see Figure 10), with the discharge valve 120 being fully closed, the filter insert 121 is in a first relative position within the housing 111. In said first relative position of the filter insert 121 within the housing 111 the upper filter sieve section 122b is blocked and the lower filter sieve section 122a are unblocked for unfiltered liquid medium. In said first relative position of the filter insert 121 within the housing 111 the lower filter sieve section 122a can filter the unfiltered liquid medium that flows from the inlet chamber 112 through the lower filter sieve section 122a into the interior chamber 124 of the filter insert 121. Said filtered liquid medium then flows from the interior chamber 124 of the filter insert 121 into the outlet chamber 113.

In the reverse rinsing mode of the reverse rinsing filter 110 (see Figure 11), with the discharge valve 120 being fully or almost fully opened, the filter insert 121 is in a second relative position within the housing 111. In said second relative position of the filter insert 121 within the housing 111 the upper filter sieve section 122b is unblocked for unfiltered liquid medium and the lower filter sieve section 122a is blocked for unfiltered liquid medium but unblocked for filtered liquid medium. In said second relative position of the filter insert 121 within the housing 111 unfiltered liquid medium flows from the inlet chamber 112 through the upper filter sieve section 122b into the interior chamber 124 of the filter insert 121. Filtered liquid medium flows from the interior chamber 24 of the filter insert 21 through the lower filter sieve section 122a back into inlet chamber 112, and then from the inlet chamber 112 into the discharge chamber 118. Filtered liquid medium flows also from the interior chamber 124 of the filter insert 121 into the outlet chamber 113.

An upper protrusion 125 extends radially outward from the filter insert 121, namely from a section of the filter sieve 122 being positioned between the upper filter sieve section 122b and the lower filter sieve section 122a. A bottom wall 126 of the filter insert 121 delimits the interior chamber 124 of the filter insert 121.

In the filtration mode of the reverse rinsing filter 110 (see Figure 10), said upper protrusion 125 of the filter insert 121 is in contact with an inner wall section 127 of the housing 111 thereby blocking the upper filter sieve section 122b from unfiltered liquid medium.

As explained above, in the filtration mode of the reverse rinsing filter 110 liquid medium to be filtered flows from the inlet chamber 112 through the lower filter sieve section 122a into the interior chamber 124 of the filter insert 121 and becomes thereby filtered. Then said filtered liquid medium flows from the interior chamber 124 of the filter insert 121 into the outlet chamber 113.

In the reserve rinsing mode of the reverse rinsing filter 110 (see Figure 11), said upper protrusion 125 of the filter insert 121 is in contact with an upper radial inwardly extending protrusion 135 of the outer wall section of the housing 111 thereby unblocking the upper filter sieve section 122b for the unfiltered liquid medium and thereby dividing the inlet chamber 112 into two sub-chambers 112a, 112b, namely a lower sub-chamber 112a and an upper sub-chamber 112b. The lower filter sieve section 122a is then blocked from for the unfiltered liquid medium.

As explained above, in the reserve rinsing mode of the reverse rinsing filter 110 unfiltered liquid medium flows from the inlet camber 112, namely from the upper sub-chamber 112b of the same, through the upper filter sieve section 122b into the interior camber 124 of the filter insert 121 and becomes thereby filtered. The filtered liquid medium then flows from the interior chamber 124 of the filter insert 121 through the lower filter sieve section 122a back into inlet chamber 112, namely into the lower sub-chamber 112a of the same, and then from the lower sub-chamber 112a of the inlet chamber 112 into the discharge chamber 118.

Unfiltered liquid medium flows through the upper filter sieve section 122b only in the reverse rinsing mode of the reverse rinsing filter 110. Liquid medium flows through the lower filter sieve section 122a in the filtering mode and in the reverse rinsing mode of the reverse ringing filter 110, namely in opposite directions. In the filtering mode, unfiltered liquid medium passes through the lower filter sieve section 122a radial inwardly from the inlet chamber 112 into the interior chamber 124. In the reserve rinsing mode, filtered liquid medium passes through the lower filter sieve section 122a radial outwardly from the interior chamber 124 into the inlet chamber 112, namely into the lower sub-chamber 112a of the inlet chamber 112.

The impeller 123 is positioned inside the interior chamber 124. The impeller 123 of the filter insert 121 comprises a central tube 130. The central tube 130 of the impeller 123 has two openings 131, 132 at opposing axial ends of the same. An upper opening 131 facing the outlet chamber 113 is always open. A lower opening 132 facing the inlet chamber 112, 112a is open or closed depending on the relative position of the sieve insert 121 within the housing 111. A valve 134 closes or opens the lower opening 132 depending on the relative position of the sieve insert 121 within the housing 111. Each central tube 130 further comprises nozzles 139. Said valve 134 comprises a valve body 140.

In the filtration mode of the reverse rinsing filter 110 (see Figure 10) said valve 134 opens the lower opening 132 thereby allowing the liquid medium to flow through the lower filter sieve section 122a into interior chamber 124 and to flow from the interior chamber 124 through the tube 130 of the impeller 123 towards the outlet chamber 113. In the reverse rinsing mode of the reverse rinsing filter 110 (see Figure 11) said valve 134 closes the lower opening 132. The liquid medium then flows through the upper filter sieve section 122b into the interior chamber 124, from the interior chamber 124 into the tube 130 of the impeller 123, then through the nozzles 139 of the impeller 123 to the lower filter sieve section 122a and from the lower filter sieve section 122a back into the inlet chamber 112, 112a and then from the inlet chamber 112, 112a into the discharge opening 118.

In the reverse rinsing mode of the reverse rinsing filter 110 the impeller 123 rotates around an longitudinal axis of the filter insert 121. Filtered liquid medium does flows through the impeller 123 during the filtration mode and during the reverse rinsing mode, but the impeller 123 rotates just during the reverse rinsing mode.

The filter insert 121 of the reverse rinsing filter 110 comprises flow ducts 136 for liquid medium. Said flow ducts 136 are positioned outside of the interior chamber 124 of the filter insert 121 and around the filter sieve 122. The flow ducts 136 extend from the upper filter sieve section 122b towards the discharge chamber 118.

In the embodiment of Figures 10 to 13, the flow ducts 136 extend from the upper protrusion 125 of the filter insert 121 towards the discharge chamber 118 and thereby through the bottom wall 126 of the filter insert 121.

The wall section 127 is part of an inner guiding section of the housing 111. A chamber between said guiding section and the upper filter sieve section 122b of filter sieve 122 is connected via flow ducts 136 with the discharge chamber 118.

The housing 111 of the reverse rinsing filter 110 provides in the region of the discharge chamber 118 stop elements 137 for lower ends 138 of the flow ducts 136.

In the filtration mode of the reverse rinsing filter 110 (see Figure 10), when the discharge valve 120 is fully closed and the filter insert 121 is in the first relative position within the housing 111, the lower ends 138 of the flow ducts 136 are lifted up from the stop elements 137. The flow ducts 136 are then opened.

In the reverse rinsing mode of the reverse rinsing filter 110 (See Figure 11), when the discharge valve 120 is fully or almost fully opened and the filter insert 121 is in the second relative position within the housing 111, the lower ends 138 of the flow ducts 136 are pressed against the stop elements 137 and are thereby sealed at the lower ends 138. The flow ducts 136 are then closed at their lower ends 138.

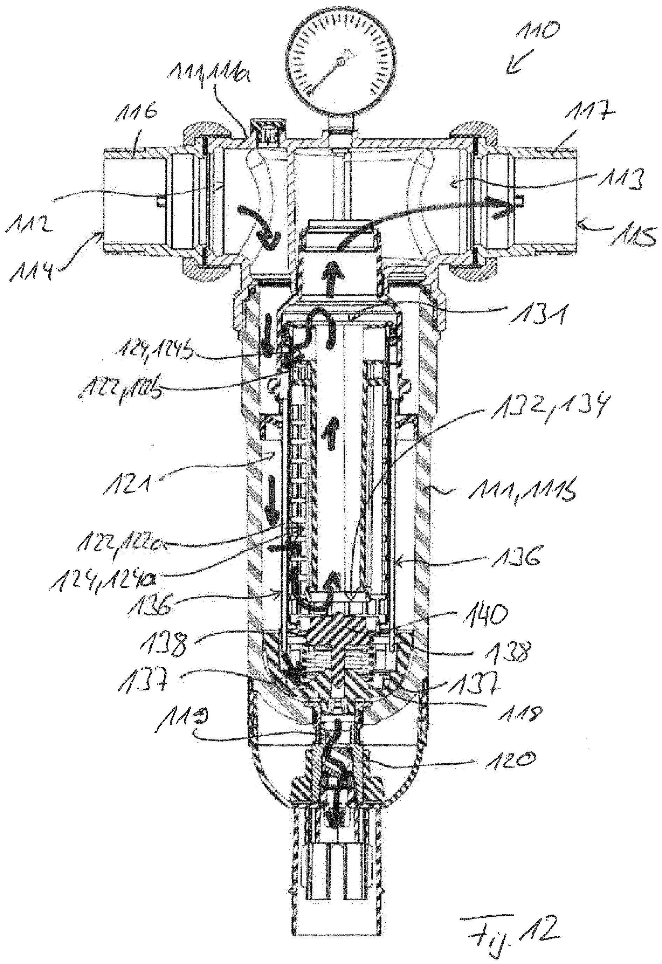

In an additional reverse rinsing mode of the reverse rinsing filter 110 (see Figure 12), when the discharge valve 120 is in a defined partially opened status, the filter insert 121 is in the first relative position within the housing 111 such that the lower filter sieve section 122a can filter liquid medium that flows from the inlet chamber 112 through the lower filter sieve section 122a into the interior chamber 124 of the filter insert 121. The filtered liquid medium can then flow from the interior chamber 124 of the filter insert 121 through the impeller 123 into the outlet chamber 113 as well as from the interior chamber 124 of the filter insert 121 through the impeller 123, through the upper filter sieve section 122b and through the flow ducts 136 into the discharge chamber 118.

The reverse rinsing filter 110 allows a backwashing of the lower filter sieve section 122a in the regular reverse rinsing mode.

The reverse rinsing filter 110 further allows a backwashing of the upper filter sieve section 122b in the additional reverse rinsing mode.

In the filtration mode of the reverse rinsing filter 110 (see Figure 10), when the discharge valve 120 is fully closed and the filter insert 121 is in the first relative position within the housing 111, no liquid fluid flows through the flow ducts 136.

Also in the reverse rinsing mode of the reverse rinsing filter 110 (See Figure 11), when the discharge valve 120 is fully or almost fully opened and the filter insert 121 is in the second relative position within the housing 111, no liquid fluid flows through the flow ducts 136. In the reverse rinsing mode of the reverse rinsing filter 110 only the lower filter sieve section 122a becomes backwashed.

Only in the additional reverse rinsing mode of the reverse rinsing filter 110 (see Figure 12), when the discharge valve 120 is in a defined partially opened status and when the filter insert 121 is in the first relative position within the housing 111, liquid fluid flows through the flow ducts 136. In the additional reverse rinsing mode only the upper filter sieve section 122b becomes backwashed.

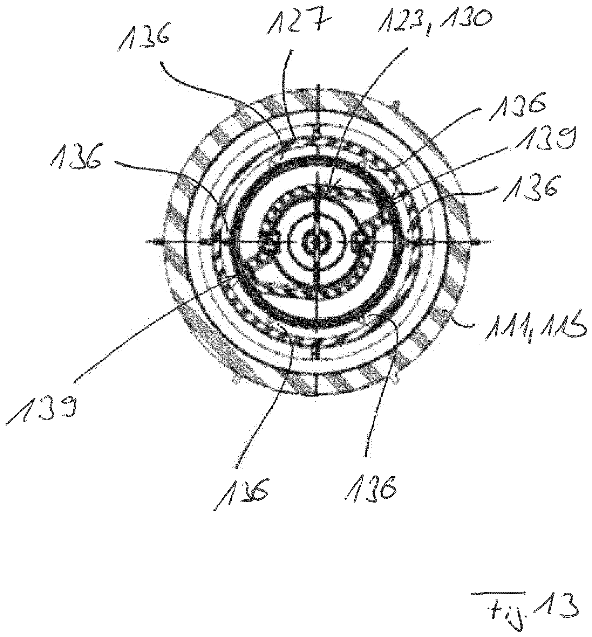

The filter insert 121 of the reverse rinsing filter 110 of the present application comprises a plurality of flow ducts 136. Said flow ducts 136 are positioned equally distributed around the filter sieve 122 in close proximity to the filter sieve 122 (see Figure 13).

The discharge valve 120 may be provided by a ball valve.

In the filtration mode of the reverse rinsing filter 110 (see Figure 10) a valve body of the discharge valve 120 is in a first position.

In the reverse rinsing mode of the reverse rinsing filter 110 (see Figure 11) the valve body is rotated by around 90°±10° relative to the first position. In said position the discharge valve 120 allows a full flow rate through the same.

In the additional reverse rinsing mode of the reverse rinsing filter 110 (see Figure 12) the valve body is rotated by a maximum of around 35° relative to the first position, thereby allowing a flow rate of around 20% of the full flow rate (which is provided in the reverse rinsing mode).

The rotation of the valve body depends on the pressure conditions in the reverse rinsing filter, on the design of the valve body.

In the first position of the valve body of the discharge valve 120 (corresponding to 0° and 180°), the discharge valve 120 is fully closed. The filter insert 121 is then in the first relative position within the housing 111. The force provided by the spring 150 and the pressure difference across the filter insert 121 moves and keeps the filter insert 121 in the first relative position within the housing 111 when the discharge valve 120 is fully closed. The reverse rinsing filter 110 is then in the filtration mode of Figure 10. When the valve body is rotated by e.g. 90°±10° relative to the first position of the valve body, then the discharge valve 120 is fully or almost fully opened. Then, the pressure difference across the filter insert 121 moves and keeps the filter insert 121 in the second relative position within the housing 111. The reverse rinsing filter 110 is then in the reverse rinsing mode of Figure 11.

When the valve body is rotated e.g. by a maximum of 35° relative to the first position of the valve body, then the discharge valve 120 is in the defined partially opened status. Then, the pressure difference across the filter insert 121 moves and keeps the filter insert 121 in the first relative position within the housing 111. The reverse rinsing filter 110 is then in the additional reverse rinsing mode of Figure 12.

The other positions of the valve body (e.g. between 35° and 80° as well as between 100° and 145°) of the discharge valve 120 are transitional positions in which the filter insert 121 moves between the first relative position within the housing 111 and the second relative position within the housing 111. The above angles of rotation of the valve body are exemplary nature only.

Backwashing of the upper filter sieve section 122b of the filter sieve 122 is performed by partially opened discharge valve 120. There is provided pressure drop across the filter sieve 122 and the upper filter sieve section 122b of the filter sieve 122 is backwashed from inside to outside via the flow ducts 136. The liquid medium flows through the flow ducts 136 directly into the discharge chamber 118. Backwashing of the upper filter sieve section 122b is done before the filter insert 121 moves down. When the filter insert 121 is moved down, the flow ducts 136 are closed by the stop elements 137 and backwashing of the lower filter sieve section 122a is performed subsequently by fully or almost fully opened discharge valve 120. The same but in converse sequence occurs by closing the discharge valve.

The sequence of the operation modes depends on the rotation of the valve body of the discharge valve. When the discharge valve 120 is fully closed (position of valve body e.g. 0°), the reverse rinsing filter is the filtration mode. Then, when the valve body of the discharge valve 120 is rotated from 0° to 180°, the reverse rinsing filter goes through following operation modes: backwashing of the upper sieve, moving of the filter sieve down, backwashing of the lower main sieve, moving of the filter sieve up, backwashing of the upper sieve, again filtration.

The operation of the discharge valve 120 can be effected manually or automatically by an actuator like a motor.

### List of reference signs

- 10: reverse rinsing filter
- 11: housing
- 11a: connection section
- 11b: filter-bowl section
- 12: inlet chamber
- 12a: sub-chamber
- 12b: sub-chamber
- 13: outlet chamber
- 14: inlet opening
- 15: outlet opening
- 16: inlet flange
- 17: outlet flange
- 18: discharge chamber
- 19: discharge opening
- 20: discharge valve
- 21: filter insert
- 22: filter sieve
- 22a: lower filter sieve section
- 22b: upper filter sieve section
- 23: impeller
- 24: interior chamber
- 24a: lower sub-chamber
- 24b: upper sub-chamber
- 25: protrusion
- 26: bottom wall
- 27: wall section
- 28: protrusion
- 29: dividing wall
- 30: central tube
- 31: outer tube
- 32: connecting tube
- 33: gap
- 34: valve
- 35: protrusion
- 36: flow duct
- 37: stop element
- 38: lower end
- 39: bearing
- 40: nozzle
- 41: opening
- 42: flap
- 43: radially outer section
- 44: recess
- 45: sealing element
- 46: fixing ring
- 47: mounting elements
- 48: sealing element
- 49: sealing element
- 50: return spring
- 51: mounting rod
- 52: spring cup
- 53: screw
- 54: centering element
- 55: wall section
- 56: O-ring

- 110: reverse rinsing filter
- 111: housing
- 111a: connection section
- 111b: filter-bowl section
- 112: inlet chamber
- 112a: sub-chamber
- 112b: sub-chamber
- 113: outlet chamber
- 114: inlet opening
- 115: outlet opening
- 116: inlet connector
- 117: outlet connector
- 118: discharge chamber
- 119: discharge opening
- 120: discharge valve
- 121: filter insert
- 122: filter sieve
- 122a: lower filter sieve section
- 122b: upper filter sieve section
- 123: impeller
- 124: interior chamber
- 124a: lower sub-chamber
- 124b: upper sub-chamber
- 125: protrusion
- 126: bottom wall
- 127: wall section
- 130: central tube
- 131: opening
- 132: opening
- 134: valve
- 135: protrusion
- 136: flow duct
- 137: stop element
- 138: end
- 139: nozzle
- 140: valve body

## Claims

1. Reverse rinsing filter (10, 110),
the reverse rinsing filter (10, 110) having a housing (11, 111),
wherein the housing (11, 111) provides an inlet chamber (12, 112) being in communication with an inlet opening (14, 114) for liquid medium to be filtered,
wherein the housing (11, 111) provides an outlet chamber (13, 113) being in communication with an outlet opening (15, 115) for filtered liquid medium, and
wherein the housing (11, 111) provides a discharge chamber (18, 118) being in communication with a discharge opening (19, 119), the reverse rinsing filter (10, 110) having a filter insert (21, 121) positioned within the housing (11, 111),
wherein the filter insert (21, 121) has an interior chamber (24, 124) and comprises a filter sieve (22, 121) with a lower filter sieve section (22a, 122a) and an upper filter sieve section (22b, 122b),
the reverse rinsing filter (10, 110) having a discharge valve (20, 120) assigned to the discharge opening (19, 119), the discharge valve (20, 120) being adapted to open and close the discharge opening (19, 119),
wherein in a filtration mode of the reverse rinsing filter (10, 110), when the discharge valve (20, 120) and the discharge opening (19, 119) is fully closed, the filter insert (21, 121) is in a first relative position within the housing (11, 111) such that the upper filter sieve section (22b, 122b) is blocked for the liquid medium to be filtered and the lower filter sieve section (22a, 122a) is unblocked for the liquid medium to be filtered,
wherein in a reverse rinsing mode of the reverse rinsing filter (10, 110), when the discharge valve (20, 120) and the discharge opening (19, 119) is fully or almost fully opened, the filter insert (21, 121) is in a second relative position within the housing (11, 111) such that the upper filter sieve section (22b, 122b) is unblocked for the liquid medium to be filtered and the lower filter sieve section (22a, 122a) is blocked for the liquid medium to be filtered but unblocked for filtered liquid medium,
**characterized in that**
the filter insert (21, 121) comprises flow ducts (36, 136) for the liquid medium,
the housing (11, 111) provides in the region of the discharge chamber (18, 118) stop elements (37, 137) for lower ends (38, 138) of the flow ducts (36, 136),
the flow ducts (36, 136) and the stop elements (37, 137) are adapted such that
in the filtration mode of the reverse rinsing filter (10, 110), when the discharge valve (20, 120) is fully closed and the filter insert (21, 121) is in the first relative position within the housing (11, 111), the lower ends (38, 138) of the flow ducts (36, 136) are lifted up from the stop elements (37, 137) and the flow ducts (36, 136) are opened,
in the reverse rinsing mode of the reverse rinsing filter (10, 110), when the discharge valve (20, 120) is fully or almost fully opened and the filter insert (21, 121) is in a second relative position within the housing (11, 111), the lower ends of the flow ducts (36, 136) are pressed against the stop elements (37, 137) and the flow ducts (36, 136) are closed,
in an additional reverse rinsing mode of the reverse rinsing filter (10, 110), when the discharge valve (20, 120) is in a defined partially opened status, the discharge opening (19, 119) is partially opened by the discharge valve (20, 120), the filter insert (21, 121) is in the first relative position within the housing (11, 111) and the lower ends (38, 138) of the flow ducts (36, 136) are lifted up from the stop elements (37, 137).

2. Reverse rinsing filter as claimed in claim 1, **characterized in that** said flow ducts (36, 136) for the liquid medium are positioned outside of the interior chamber (24, 124) of the filter insert (21, 121) and around the filter sieve (22, 122), wherein the flow ducts (36, 136) extend from the upper filter sieve section (22b, 122b) towards the discharge chamber (18, 118).

3. Reverse rinsing filter as claimed in claim 1 or 2, **characterized in that** the flow ducts (36, 136) are positioned equally distributed around the filter sieve (22, 122) in close proximity to the filter sieve (22, 122).

4. Reverse rinsing filter as claimed in one of claims 1 to 3, **characterized in that** in the reverse rinsing mode of the reverse rinsing filter (10, 110), when the discharge valve (20, 120) is fully or almost fully opened and the filter insert (21, 121) is in the second relative position within the housing (11, 111), the lower ends (38, 138) of the flow ducts (36, 136) are sealed by the stop elements (37, 137).

5. Reverse rinsing filter as claimed in one of claims 1 to 4, **characterized in that** the filter insert (21, 121) comprises a bottom wall (26, 126) which delimits the interior chamber (24, 124) of the filter insert (21, 121), and that the flow ducts (36, 136) extend through the bottom wall (26, 126).

6. Reverse rinsing filter as claimed in claim 5, **characterized in that**
in the filtration mode and in the additional reverse rinsing mode the bottom wall (26) is positioned radial inwardly of a radial inwardly extending protrusion (28) of the housing (11) thereby separating a lower sub-chamber (12a) of the inlet chamber (12) from the discharge chamber (18).
in the reverse rinsing mode the bottom wall (26) is positioned axially offset from the radial inwardly extending protrusion (28) of the housing (11) thereby connecting the lower sub-chamber (12a) of the inlet chamber (12) with the discharge chamber (18).

7. Reverse rinsing filter as claimed in claim 6, **characterized in that** in the filtration mode and in the additional reverse rinsing mode a gap (33) is formed between the bottom wall (26) of the filter insert (21) and the radial inwardly extending protrusion (28) of the housing (11).

8. Reverse rinsing filter as claimed in claim 6 or 7, **characterized in that** a radially outer section (43) of the bottom wall (26) of the filter insert (21) is conically shaped.

9. Reverse rinsing filter as claimed in claim 7 or 8, **characterized in that** in the filtration mode and in the additional reverse rinsing mode the gap (33) between the bottom wall (26) and the radial inwardly extending protrusion (28) is tapering from the lower sub-chamber (12a) of the inlet chamber (12) towards the discharge chamber (18).

10. Reverse rinsing filter as claimed in one of claims 6 to 9, **characterized in that** an radially outer section (43) of the bottom wall (26) comprises a recess (44) accommodating a sealing element (45, 48, 49).

11. Reverse rinsing filter as claimed in one of claims 1 to 10, **characterized in that**
in the filtration mode of the reverse rinsing filter (10, 110) a valve body of the discharge valve (20, 120) is in a first position,
in the reverse rinsing mode of the reverse rinsing filter (10, 110) the valve body is rotated by 90°±10° relative to the first position,
in the additional reverse rinsing mode of the reverse rinsing filter (10, 110) the valve body is rotated by a maximum of 35° relative to the first position,
the discharge valve (20, 120) is preferably provided by a ball valve.

12. Reverse rinsing filter as claimed in one of claims 1 to 11, **characterized by** an actuator for automatically operating the discharge valve (20, 120).

13. Method for operating the reverse rinsing filter (10, 110) as claimed in one of claims 1 to 12,
wherein for operating the reverse rinsing filter in filtration mode, the discharge valve (20, 120) is fully closed,
wherein in the filtration mode, the filter insert (21, 121) is in a first relative position within the housing (11, 111) such that the upper filter sieve section (22b, 122b) is blocked for the liquid medium to be filtered and the lower filter sieve section (22a, 122a) is unblocked for the liquid medium to be filtered, so that the lower filter sieve section (22a, 122a) filters liquid medium that flows from the inlet chamber (12, 112) through the lower filter sieve section (22a, 122a) into the interior chamber (24, 124) of the filter insert (21, 121) and then from the interior chamber (24, 124) of the filter insert (21, 121) into the outlet chamber (13, 113),
wherein in the filtration mode the lower ends (38, 138) of the flow ducts (36, 136) are lifted up from the stop elements (37, 137), wherein for operating the reverse rinsing filter in the reverse rinsing mode, the discharge valve (20, 120) is fully or almost fully opened,
wherein in the reverse rinsing mode, the filter insert (21, 121) is in a second relative position within the housing (11, 111) such that the upper filter sieve section (22b, 122b) is unblocked for the liquid medium to be filtered and the lower filter sieve section (22a, 122a) is blocked for the liquid medium to be filtered but unblocked for filtered liquid medium, so that liquid medium flows from the inlet chamber (12, 112) through the upper filter sieve section (22b, 122b) into the interior chamber (24, 124) of the filter insert (21, 121) and then from the interior chamber (24, 124) of the filter insert (21, 121) through the lower filter sieve section (22a, 122a) into the inlet chamber (12, 112) and then to the discharge chamber (18, 118),
wherein in the reverse rinsing mode the lower ends of the flow ducts (36, 136) are pressed against the stop elements (37, 137), wherein for operating the reverse rinsing filter in the additional reverse rinsing mode, the discharge valve (20, 120) is partially opened,
wherein in the additional reverse rinsing mode, when the discharge valve (20, 120) is in the defined partially opened status, the filter insert (21, 121) is in the first relative position within the housing (11, 111) and the lower ends (38, 138) of the flow ducts (36, 136) are lifted up from the stop elements (37, 137) such that the lower filter sieve section (22a, 122a) filters liquid medium that flows from the inlet chamber (12, 112) through the lower filter sieve section (22a, 122a) into the interior chamber (24, 124) of the filter insert (21, 121) and then from the interior chamber (24) of the filter insert into the outlet chamber (13, 113) and from the interior chamber (24, 124) of the filter insert through the upper filter sieve section (22b, 122b) and through the flow ducts (36, 136) into the discharge chamber (18, 118).

## Patentansprüche

1. Rückspülfilter (10, 110),
wobei der Rückspülfilter (10, 110), ein Gehäuse (11, 111) aufweist,
wobei das Gehäuse (11, 111) eine Einlasskammer (12, 112) vorsieht, die mit einer Einlassöffnung (14, 114) für ein zu filterndes flüssiges Medium verbunden ist,
wobei das Gehäuse (11, 111) eine Auslasskammer (13, 113) vorsieht, die mit einer Auslassöffnung (15, 115) für ein gefiltertes flüssiges Medium verbunden ist, und
wobei das Gehäuse (11, 111) eine Ablasskammer (18, 118) vorsieht, die mit einer Ablassöffnung (19, 119) verbunden ist,
wobei der Rückspülfilter (10, 110) einen Filtereinsatz (21, 121) aufweist, der innerhalb des Gehäuses (11, 111) angeordnet ist,
wobei der Filtereinsatz (21, 121) eine Innenkammer (24, 124) aufweist und ein Filtersieb (22, 121) mit einem unteren Filtersiebabschnitt (22a, 122a) und einem oberen Filtersiebabschnitt (22b, 122b) umfasst,
wobei der Rückspülfilter (10, 110) ein Ablassventil (20, 120) aufweist, das der Ablassöffnung (19, 119) zugeordnet ist, wobei das Ablassventil (20, 120) dazu eingerichtet ist, die Ablassöffnung (19, 119) zu öffnen und zu schließen,
wobei sich der Filtereinsatz (21, 121) im Filtrationsmodus des Rückspülfilters (10, 110), wenn das Ablassventil (20, 120) und die Ablassöffnung (19, 119) vollständig geschlossen sind, in einer ersten relativen Position innerhalb des Gehäuses (11, 111) befindet, sodass der obere Filtersiebabschnitt (22b, 122b) für das zu filternde flüssige Medium blockiert ist und der untere Filtersiebabschnitt (22a, 122a) für das zu filternde flüssige Medium frei ist,
wobei sich der Filtereinsatz (21, 121) im Rückspülmodus des Rückspülfilters (10, 110), wenn das Ablassventil (20, 120) und die Ablassöffnung (19, 119) vollständig oder fast vollständig geöffnet sind, in einer zweiten relativen Position innerhalb des Gehäuses (11, 111) befindet, sodass der obere Filtersiebabschnitt (22b, 122b) für das zu filternde flüssige Medium frei ist und der untere Filtersiebabschnitt (22a, 122a) für das zu filternde flüssige Medium blockiert ist, aber für das gefilterte flüssige Medium frei ist,
**dadurch gekennzeichnet, dass**
der Filtereinsatz (21, 121) Strömungskanäle (36, 136) für das flüssige Medium umfasst,
das Gehäuse (11, 111) im Bereich der Ablasskammer (18, 118) Anschlagelemente (37, 137) für untere Enden (38, 138) der Strömungskanäle (36, 136) vorsieht,
die Strömungskanäle (36, 136) und die Anschlagelemente (37, 137) derart eingerichtet sind, dass
die unteren Enden (38, 138) der Strömungskanäle (36, 136) im Filtrationsmodus des Rückspülfilters (10, 110), wenn das Ablassventil (20, 120) vollständig geschlossen ist und sich der Filtereinsatz (21, 121) in der ersten relativen Position innerhalb des Gehäuses (11, 111) befindet, von den Anschlagelementen (37, 137) angehoben sind und die Strömungskanäle (36, 136) geöffnet sind,
die unteren Enden der Strömungskanäle (36, 136) im Rückspülmodus des Rückspülfilters (10, 110), wenn das Ablassventil (20, 120) vollständig oder fast vollständig geöffnet ist und sich der Filtereinsatz (21, 121) in einer zweiten relativen Position innerhalb des Gehäuses (11, 111) befindet, gegen die Anschlagelemente (37, 137) gedrückt sind und die Strömungskanäle (36, 136) geschlossen sind,
in einem zusätzlichen Rückspülmodus des Rückspülfilters (10, 110), wenn sich das Ablassventil (20, 120) in einem definierten teilweise geöffneten Zustand befindet, die Ablassöffnung (19, 119) vom Ablassventil (20, 120) teilweise geöffnet ist, sich der Filtereinsatz (21, 121) in der ersten relativen Position innerhalb des Gehäuses (11, 111) befindet und die unteren Enden (38, 138) der Strömungskanäle (36, 136) von den Anschlagelementen (37, 137) angehoben sind.

2. Rückspülfilter nach Anspruch 1, **dadurch gekennzeichnet, dass** die Strömungskanäle (36, 136) für das flüssige Medium außerhalb der Innenkammer (24, 124) des Filtereinsatzes (21, 121) und um das Filtersieb (22, 122) angeordnet sind, wobei sich die Strömungskanäle (36, 136) vom oberen Filtersiebabschnitt (22b, 122b) zur Ablasskammer (18, 118) erstrecken.

3. Rückspülfilter nach Anspruch 1 oder 2, **dadurch gekennzeichnet, dass** die Strömungskanäle (36, 136) gleichmäßig verteilt um das Filtersieb (22, 122) nah am Filtersieb (22, 122) angeordnet sind.

4. Rückspülfilter nach einem der Ansprüche 1 bis 3, **dadurch gekennzeichnet, dass** im Rückspülmodus des Rückspülfilters (10, 110), wenn das Ablassventil (20, 120) vollständig oder fast vollständig geöffnet ist und sich der Filtereinsatz (21, 121) in der zweiten relativen Position innerhalb des Gehäuses (11, 111) befindet, die unteren Enden (38, 138) der Strömungskanäle (36, 136) von den Anschlagelementen (37, 137) abgedichtet sind.

5. Rückspülfilter nach einem der Ansprüche 1 bis 4, **dadurch gekennzeichnet, dass** der Filtereinsatz (21, 121) eine Bodenwand (26, 126) umfasst, die die Innenkammer (24, 124) des Filtereinsatzes (21, 121) begrenzt, und dass sich die Strömungskanäle (36, 136) durch die Bodenwand (26, 126) erstrecken.

6. Rückspülfilter nach Anspruch 5, **dadurch gekennzeichnet, dass**
im Filtrationsmodus und im zusätzlichen Rückspülmodus die Bodenwand (26) radial innerhalb eines sich radial nach innen erstreckenden Vorsprungs (28) des Gehäuses (11) angeordnet ist, wodurch eine untere Teilkammer (12a) der Einlasskammer (12) von der Ablasskammer (18) getrennt wird.
im Rückspülmodus die Bodenwand (26) von dem sich radial nach innen erstreckenden Vorsprung (28) des Gehäuses (11) axial versetzt angeordnet ist, wodurch die untere Teilkammer (12a) der Einlasskammer (12) mit der Ablasskammer (18) verbunden wird.

7. Rückspülfilter nach Anspruch 6, **dadurch gekennzeichnet, dass** im Filtrationsmodus und im zusätzlichen Rückspülmodus ein Spalt (33) zwischen der Bodenwand (26) des Filtereinsatzes (21) und dem sich radial nach innen erstreckenden Vorsprung (28) des Gehäuses (11) ausgebildet ist.

8. Rückspülfilter nach einem der Ansprüche 6 oder 7, **dadurch gekennzeichnet, dass** ein radialer Außenabschnitt (43) der Bodenwand (26) des Filtereinsatzes (21) konisch geformt ist.

9. Rückspülfilter nach Anspruch 7 oder 8, **dadurch gekennzeichnet, dass** sich im Filtrationsmodus und im zusätzlichen Rückspülmodus der Spalt (33) zwischen der Bodenwand (26) und dem sich radial nach innen erstreckenden Vorsprung (28) von der unteren Teilkammer (12a) der Einlasskammer (12) zur Auslasskammer (18) verjüngt.

10. Rückspülfilter nach einem der Ansprüche 6 bis 9, **dadurch gekennzeichnet, dass** ein radialer Außenabschnitt (43) der Bodenwand (26) eine Aussparung (44) umfasst, in der ein Dichtungselement (45, 48, 49) aufgenommen ist.

11. Rückspülfilter nach einem der Ansprüche 1 bis 10, **dadurch gekennzeichnet, dass**
sich ein Ventilkörper des Ablassventils (20, 120) im Filtrationsmodus des Rückspülfilters (10, 110) in einer ersten Position befindet,
der Ventilkörper im Rückspülmodus des Rückspülfilters (10, 110) im Bezug zur ersten Position um 90°±10° gedreht ist,
der Ventilkörper im zusätzlichen Rückspülmodus des Rückspülfilters (10, 110) im Bezug zur ersten Position um maximal 35° gedreht ist,
das Ablassventil (20, 120) vorzugsweise durch ein Kugelventil vorgesehen ist.

12. Rückspülfilter nach einem der Ansprüche 1 bis 11, **gekennzeichnet durch** ein Stellglied zum automatischen Betreiben des Ablassventils (20, 120).

13. Verfahren zum Betreiben des Rückspülfilters (10, 110) nach einem der Ansprüche 1 bis 12,
wobei das Ablassventil (20, 120) zum Betreiben des Rückspülfilters im Filtrationsmodus vollständig geschlossen ist,
wobei sich der Filtereinsatz (21, 121) im Filtrationsmodus in einer ersten relativen Position innerhalb des Gehäuses (11, 111) befindet, sodass der obere Filtersiebabschnitt (22b, 122b) für das zu filternde flüssige Medium blockiert wird und der untere Filtersiebabschnitt (22a, 122a) für das zu filternde flüssige Medium frei ist, sodass der untere Filtersiebabschnitt (22a, 122a) flüssiges Medium, das von der Einlasskammer (12, 112) durch den unteren Filtersiebabschnitt (22a, 122a) in die Innenkammer (24, 124) des Filtereinsatzes (21, 121) und anschließend von der Innenkammer (24, 124) des Filtereinsatzes (21, 121) in die Auslasskammer (13, 113) strömt, filtert,
wobei die unteren Enden (38, 138) der Strömungskanäle (36, 136) im Filtrationsmodus von den Anschlagelementen (37, 137) angehoben werden, wobei das Ablassventil (20, 120) zum Betreiben des Rückspülfilters im Rückspülmodus vollständig oder fast vollständig geöffnet ist,
wobei sich der Filtereinsatz (21, 121) im Rückspülmodus in einer zweiten relativen Position innerhalb des Gehäuses (11, 111) befindet, sodass der obere Filtersiebabschnitt (22b, 122b) für das zu filternde flüssige Medium frei ist und der untere Filtersiebabschnitt (22a, 122a) für das zu filternde flüssige Medium blockiert wird, aber für das gefilterte flüssige Medium frei ist, sodass flüssiges Medium von der Einlasskammer (12, 112) durch den oberen Filtersiebabschnitt (22b, 122b) in die Innenkammer (24, 124) des Filtereinsatzes (21, 121) und anschließend von der Innenkammer (24, 124) des Filtereinsatzes (21, 121) durch den unteren Filtersiebabschnitt (22a, 122a) in die Einlasskammer (12, 112) und anschließend in die Ablasskammer (18, 118) strömt,
wobei die unteren Enden der Strömungskanäle (36, 136) im Rückspülmodus gegen die Anschlagelemente (37, 137) gedrückt werden,
wobei das Ablassventil (20, 120) zum Betreiben des Rückspülfilters im zusätzlichen Rückspülmodus teilweise geöffnet ist,
wobei sich der Filtereinsatz (21, 121) im zusätzlichen Rückspülmodus, wenn sich das Ablassventil (20, 120) im definierten teilweise geöffneten Zustand befindet, in der ersten relativen Position innerhalb des Gehäuses (11, 111) befindet und die unteren Enden (38, 138) der Strömungskanäle (36, 136) von den Anschlagelementen (37, 137) angehoben werden, sodass der untere Filtersiebabschnitt (22a, 122a) flüssiges Medium, das von der Einlasskammer (12, 112) durch den unteren Filtersiebabschnitt (22a, 122a) in die Innenkammer (24, 124) des Filtereinsatzes (21, 121) und anschließend von der Innenkammer (24) des Filtereinsatzes in die Auslasskammer (13, 113) und von der Innenkammer (24, 124) des Filtereinsatzes durch den oberen Filtersiebabschnitt (22b, 122b) und durch die Strömungskanäle (36, 136) in die Ablasskammer (18, 118) strömt, filtert.

## Revendications

1. Filtre de rinçage inverse (10, 110),
le filtre de rinçage inverse (10, 110) ayant un logement (11, 111),
dans lequel le logement (11, 111) comprend une chambre d'entrée (12, 112) en communication avec une ouverture d'entrée (14, 114) pour un milieu liquide à filtrer,
dans lequel le logement (11, 111) comprend une chambre de sortie (13, 113) en communication avec une ouverture de sortie (15, 115) pour le milieu liquide filtré, et
dans lequel le logement (11, 111) comprend une chambre d'évacuation (18, 118) en communication avec une ouverture d'évacuation (19, 119),
le filtre de rinçage inverse (10, 110) ayant un insert de filtre (21, 121) positionné à l'intérieur du logement (11, 111),
dans lequel l'insert de filtre (21, 121) a une chambre intérieure (24, 124) et comprend un tamis de filtre (22, 121) ayant une section inférieure de tamis de filtre (22a, 122a) et une section supérieure de tamis de filtre (22b, 122b),
le filtre de rinçage inverse (10, 110) ayant une soupape d'évacuation (20, 120) attribuée à l'ouverture d'évacuation (19, 119), la soupape d'évacuation (20, 120) étant conçue pour ouvrir et fermer l'ouverture d'évacuation (19, 119),
dans lequel dans un mode de filtration du filtre de rinçage inverse (10, 110), lorsque la soupape d'évacuation (20, 120) et l'ouverture d'évacuation (19, 119) sont complètement fermées, l'insert de filtre (21, 121) est dans une première position relative à l'intérieur du logement (11, 111) de sorte que la section supérieure de tamis de filtre (22b, 122b) est bloquée pour le milieu liquide à filtrer et que la section inférieure de tamis de filtre (22a, 122a) est débloquée pour le milieu liquide à filtrer,
dans lequel dans un mode de rinçage inverse du filtre de rinçage inverse (10, 110), lorsque la soupape d'évacuation (20, 120) et l'ouverture d'évacuation (19, 119) sont complètement ou presque complètement ouvertes, l'insert de filtre (21, 121) est dans une seconde position relative à l'intérieur du logement (11, 111) de sorte que la section supérieure de tamis de filtre (22b, 122b) est débloquée pour le milieu liquide à filtrer et que la section inférieure de tamis de filtre (22a, 122a) est bloquée pour le milieu liquide à filtrer mais débloquée pour le milieu liquide filtré,
**caractérisé en ce que**
l'insert de filtre (21, 121) comprend des conduits d'écoulement (36, 136) pour le milieu liquide,
le logement (11, 111) comprend dans la région de la chambre d'évacuation (18, 118) des éléments d'arrêt (37, 137) pour des extrémités inférieures (38, 138) des conduits d'écoulement (36, 136),
les conduits d'écoulement (36, 136) et les éléments d'arrêt (37, 137) sont conçus de telle sorte que
dans le mode de filtration du filtre de rinçage inverse (10, 110), lorsque la soupape d'évacuation (20, 120) est complètement fermée et que l'insert de filtre (21, 121) est dans la première position relative à l'intérieur du logement (11, 111), les extrémités inférieures (38, 138) des conduits d'écoulement (36, 136) sont soulevées par rapport aux éléments d'arrêt (37, 137) et les conduits d'écoulement (36, 136) sont ouverts,
dans le mode de rinçage inverse du filtre de rinçage inverse (10, 110), lorsque la soupape d'évacuation (20, 120) est complètement ou presque complètement ouverte et que l'insert de filtre (21, 121) est dans une seconde position relative à l'intérieur du logement (11, 111), les extrémités inférieures des conduits d'écoulement (36, 136) sont pressées contre les éléments d'arrêt (37, 137) et les conduits d'écoulement (36, 136) sont fermés,
dans un mode de rinçage inverse supplémentaire du filtre de rinçage inverse (10, 110), lorsque la soupape d'évacuation (20, 120) est dans un état partiellement ouvert défini, l'ouverture de décharge (19, 119) est partiellement ouverte par la soupape de décharge (20, 120), l'insert de filtre (21, 121) est dans la première position relative à l'intérieur du logement (11, 111) et les extrémités inférieures (38, 138) des conduits d'écoulement (36, 136) sont soulevées par rapport aux éléments d'arrêt (37, 137).

2. Filtre de rinçage inverse selon la revendication 1, **caractérisé en ce que** lesdits conduits d'écoulement (36, 136) pour le milieu liquide sont positionnés à l'extérieur de la chambre intérieure (24, 124) de l'insert de filtre (21, 121) et autour du tamis de filtre (22, 122), dans lequel les conduits d'écoulement (36, 136) s'étendent depuis la section supérieure de tamis de filtre (22b, 122b) vers la chambre d'évacuation (18, 118).

3. Filtre de rinçage inverse selon la revendication 1 ou 2, **caractérisé en ce que** les conduits d'écoulement (36, 136) sont positionnés de manière également répartie autour du tamis de filtre (22, 122) très près du tamis de filtre (22, 122).

4. Filtre de rinçage inverse selon l'une quelconque des revendications 1 à 3, **caractérisé en ce que** dans le mode de rinçage inverse du filtre de rinçage inverse (10, 110), lorsque la soupape d'évacuation (20, 120) est complètement ou presque complètement ouverte et que l'insert de filtre (21, 121) est dans la seconde position relative à l'intérieur du logement (11, 111), les extrémités inférieures (38, 138) des conduits d'écoulement (36, 136) sont scellées par les éléments d'arrêt (37, 137).

5. Filtre de rinçage inverse selon l'une quelconque des revendications 1 à 4, **caractérisé en ce que** l'insert de filtre (21, 121) comprend une paroi inférieure (26, 126) qui délimite la chambre intérieure (24, 124) de l'insert de filtre (21, 121) et **en ce que** les conduits d'écoulement (36, 136) s'étendent à travers la paroi inférieure (26, 126) .

6. Filtre de rinçage inverse selon la revendication 5, **caractérisé en ce que**
dans le mode de filtration et dans le mode de rinçage inverse supplémentaire, la paroi inférieure (26) est positionnée radialement vers l'intérieur d'une saillie radiale s'étendant vers l'intérieur (28) du logement (11), séparant ainsi une sous-chambre inférieure (12a) de la chambre d'entrée (12) de la chambre d'évacuation (18),
dans le mode de rinçage inverse, la paroi inférieure (26) est positionnée axialement décalée de la saillie radiale s'étendant vers l'intérieur (28) du logement (11), reliant ainsi la sous-chambre inférieure (12a) de la chambre d'entrée (12) à la chambre d'évacuation (18).

7. Filtre de rinçage inverse selon la revendication 5, **caractérisé en ce que** dans le mode de filtration et dans le mode de rinçage inverse supplémentaire, un espace (33) est formé entre la paroi inférieure (26) de l'insert de filtre (21) et la saillie radiale s'étendant vers l'intérieur (28) du logement (11).

8. Filtre de rinçage inverse selon la revendication 6 ou 7, **caractérisé en ce qu'**une section radialement extérieure (43) de la paroi inférieure (26) de l'insert de filtre (21) est de forme conique.

9. Filtre de rinçage inverse selon la revendication 7 ou 8, **caractérisé en ce que** dans le mode de filtration et dans le mode de rinçage inverse supplémentaire, l'espace (33) entre la paroi inférieure (26) et la saillie radiale s'étendant vers l'intérieur (28) diminue à partir de la sous-chambre inférieure (12a) de la chambre d'entrée (12) vers la chambre d'évacuation (18).

10. Filtre de rinçage inverse selon l'une quelconque des revendications 6 à 9, **caractérisé en ce qu'**une section radialement extérieure (43) de la paroi inférieure (26) comprend un évidement (44) logeant un élément d'étanchéité (45, 48, 49).

11. Filtre de rinçage inverse selon l'une quelconque des revendications 1 à 10, **caractérisé en ce que**
dans le mode de filtration du filtre de rinçage inverse (10, 110), un corps de soupape de la soupape d'évacuation (20, 120) est dans une première position,
dans le mode de rinçage inverse du filtre de rinçage inverse (10, 110), le corps de soupape est tourné de 90°± 10° par rapport à la première position,
dans le mode de rinçage inverse supplémentaire du filtre de rinçage inverse (10, 110), le corps de soupape est tourné d'au maximum 35° par rapport à la première position,
la soupape d'évacuation (20, 120) est de préférence fournie par un clapet à bille.

12. Filtre de rinçage inverse selon l'une quelconque des revendications 1 à 11, **caractérisé par** un actionneur destiné à faire fonctionner automatiquement la soupape d'évacuation (20, 120).

13. Procédé de fonctionnement du filtre de rinçage inverse (10, 110) selon l'une quelconque des revendications 1 à 12,
dans lequel pour faire fonctionner le filtre de rinçage inverse en mode de filtration, la soupape d'évacuation (20, 120) est complètement fermée,
dans lequel dans le mode de filtration, l'insert de filtre (21, 121) est dans une première position relative à l'intérieur du logement (11, 111) de sorte que la section supérieure de tamis de filtre (22b, 122b) est bloquée pour le milieu liquide à filtrer et la section inférieure de tamis de filtre (22a, 122a) est débloquée pour le milieu liquide à filtrer, afin que la section inférieure de tamis de filtre (22a, 122a) filtre le milieu liquide qui s'écoule depuis la chambre d'entrée (12, 112) à travers la section inférieure de tamis de filtre (22a, 122a) dans la chambre intérieure (24, 124) de l'insert de filtre (21, 121) puis de la chambre intérieure (24, 124) de l'insert de filtre (21, 121) dans la chambre de sortie (13, 113),
dans lequel dans le mode de filtration, les extrémités inférieures (38, 138) des conduits d'écoulement (36, 136) sont soulevées par rapport aux éléments d'arrêt (37, 137),
dans lequel pour faire fonctionner le filtre de rinçage inverse en mode de filtrage inverse, la soupape d'évacuation (20, 120) est complètement ou presque complètement ouverte,
dans lequel dans le mode de filtrage inverse, l'insert de filtre (21, 121) est dans une seconde position relative à l'intérieur du logement (11, 111) de sorte que la section supérieure de tamis de filtre (22b, 122b) est débloquée pour le milieu liquide à filtrer et la section inférieure de tamis de filtre (22a, 122a) est bloquée pour le milieu liquide à filtrer mais débloquée pour le milieu liquide filtré, afin que le milieu liquide s'écoule depuis la chambre d'entrée (12, 112) à travers la section inférieure de tamis de filtre (22a, 122a) dans la chambre intérieure (24, 124) de l'insert de filtre (21, 121) puis de la chambre intérieure (24, 124) de l'insert de filtre (21, 121) à travers la section inférieure de tamis de filtre (22a, 122a) dans la chambre d'entrée (12, 112) puis dans la chambre d'évacuation (18, 118),
dans lequel dans le mode de rinçage inverse, les extrémités inférieures des conduits d'écoulement (36, 136) sont pressées contre les éléments d'arrêt (37, 137),
dans lequel pour faire fonctionner le filtre de rinçage inverse en mode de filtrage inverse supplémentaire, la soupape d'évacuation (20, 120) est en partie ouverte,
dans lequel dans le mode de rinçage inverse supplémentaire, lorsque la soupape d'évacuation (20, 120) est dans l'état partiellement ouvert défini, l'insert de filtre (21, 121) est dans la première position relative à l'intérieur du logement (11, 111) et les extrémités inférieures (38, 138) des conduits d'écoulement (36, 136) sont soulevées par rapport aux éléments d'arrêt (37, 137) afin que la section inférieure de tamis de filtre (22a, 122a) filtre le milieu liquide qui s'écoule depuis la chambre d'entrée (12, 112) à travers la section inférieure de tamis de filtre (22a, 122a) dans la chambre intérieure (24, 124) de l'insert de filtre (21, 121) puis de la chambre intérieure (24) de l'insert de filtre dans la chambre de sortie (13, 113) et de la chambre intérieure (24, 124) de l'insert de filtre à travers la section supérieure de tamis de filtre (22b, 122b) et à travers les conduits d'écoulement (36, 136) dans la chambre d'évacuation (18, 118).
